# EUROPEAN PATENT SPECIFICATION

(11) **EP 2 248 676 B1**
(45) Date of publication and mention of the grant of the patent: **05.06.2013**
(21) Application number: 10161348.7
(22) Date of filing: 28.04.2010
(51) Int. Cl.: B32B 17/10, B44C 1/10, B44C 5/04, B44F 1/04

(54) **Decoration panel for home appliance**
Dekorplatte für ein Haushaltsgerät
Panneau de décoration pour appareil domestique

(30) Priority: 06.05.2009 KR 20090039355
(43) Date of publication of application: 10.11.2010
(73) Proprietor: LG Electronics, Inc., Seoul 150-721 (KR)
(72) Inventor: Kim, Kyung Do, 641-711 Gyoungsangnam-do (KR); Jun, Hyun Woo, 641-711 Gyoungsangnam-do (KR); Son, Min Ju, 641-711 Gyoungsangnam-do (KR); Jeong, Seok Jae, 641-711 Gyoungsangnam-do (KR); Jung, Hyun Gi, 641-711, Gyoungsangnam-do (KR); Kim, Young Kyu, 641-711 Gyoungsangnam-do (KR)
(74) Representative: Cabinet Plasseraud

(56) References cited:
- EP-A1- 1 876 151
- EP-A2- 1 637 350
- WO-A1-2005/105689
- WO-A2-02/062591
- DE-U1-202006 002 830
- GB-A- 2 254 042
- JP-A- 9 301 743

## Description

### BACKGROUND

The present disclosure relates to a decoration panel for a home appliance.

Generally, in home appliances such as refrigerators, washing machines, air-conditioners, and dishwashers, a main body or a door are formed of a metal plate or plastic. Thus, the main body or door has various colors, textures, or patterns.

Such a home appliance is being elegant and distinguished in design due to the increase of the living standards and consumer preference. In particular, since the functions as well as design of home appliance are now recognized as important effects for deciding a purchase, home appliances having various patterns, colors, and textures are being developed.

For example, a decoration member defining the main body or door of the home appliance is formed of a VCM (vinyl coated metal) plate. Also, to express various colors and textures and provide deluxe feeling, the decoration member is formed of a tempered glass panel to define a whole outer appearance or a portion of the outer appearance of the home appliance. Thus, home appliances and decoration members that have elegance and distinguish of the whole outer appearance are being developed.

In particular, a tempered glass on which various colors and patterns are printed is now used as the decoration member defining the main body or at least portion of a front surface of the home appliance. The tempered glass is preferred by a user due to its proper texture and various colors and patterns.

Typically, a silk screen process is performed on the decoration member formed of a tempered glass to directly print colors and patterns on the decoration member. However, the silk screen process is discontinuously and slowly performed in its manufacturing process characteristics. Thus, the process efficiency may be reduced due to the increase of defective proportion, and manufacturing costs may increase.

A known decoration panel is disclosed in EP 1 876 151.

### SUMMARY

The invention is defined by the appended claims.

In one embodiment, a decoration panel for a home appliance is provided according to claim 1.

The decoration panel for the home appliance may further include a print adhesive layer between the print layer and the reflective layer, wherein print adhesive layer may adhere the print layer to the reflective layer.

After the print layer and the reflective layer are adhered to each other, the print layer may be adhered to the back surface of the green glass.

Any one of a metal flake, pearl, mica, and silica may be added to the print layer or the print adhesive layer to express a glittering impression.

The white inorganic pigment may use any one of Ag, Zn, titanium oxide (TiO2) and barium oxide (BaO).

A red base layer may be further disposed on a back surface of the reflective layer having a white color, wherein the red base layer may have a red color that is complemented by the green color of the green glass to improve the color reflectance of the reflective layer.

The reflective layer may include: a white base layer printed by a printing ink containing a white inorganic pigment to improve a color reflectance; a red base layer printed with a red color on the white base layer to improve concealability of the green color of the green glass.

The decoration panel for the home appliance may further include a film adhesive layer between the decoration film and the green glass to adhere the decoration film to the green glass.

The decoration panel for the home appliance may further include: a print support layer on which the print layer is printed using the gravure printing process on a top surface of the print layer; and a reflective support layer on which the reflective layer is printed using the gravure printing process on a bottom surface of the reflective layer.

The reflective support layer may have a red color complemented by the green color of the green glass.

The print support layer and the reflective support layer may be formed of polyethylene terephthalate (PET) or polyvinyl chloride (PVC).

The decoration panel may be disposed on a main body or door defining an outer appearance of the home appliance.

The home appliance may include any one of a refrigerator, a washing machine, an air-conditioner, and a dishwasher.

The decoration film may be adhered to the home appliance by an adhesive.

An end of the decoration panel may be received into a deco member defining a portion of an outer appearance of the home appliance, and the decoration film may be fixedly mounted to the deco member.

The details of one or more embodiments are set forth in the accompanying drawings and the description below. Other features will be apparent from the description and drawings, and from the claims.

### BRIEF DESCRIPTION OF THE DRAWINGS

Fig. 1 is a sectional view of a decoration panel for a home appliance according to an embodiment.

Fig. 2 is a schematic sectional view of a state in which light is reflected by a decoration panel for a home appliance according to an embodiment.

Fig. 3 is a front view of a side-by-side refrigerator to which a decoration panel for a home appliance is applied according to an embodiment.

Fig. 4 is an exploded perspective view illustrating a door of Fig. 4.

Fig. 5 is a perspective view of a chest refrigerator to which a decoration panel for a home appliance is applied according to an embodiment.

Fig. 6 is a perspective view of an air-conditioner to which a decoration panel for a home appliance is applied according to an embodiment.

Fig. 7 is a sectional view taken along line A-A' of Fig. 6.

Fig. 8 is a perspective view of a washing machine to which a decoration panel for a home appliance is applied according to an embodiment.

Fig. 9 is a perspective view of a dishwasher to which a decoration panel for a home appliance is applied according to an embodiment.

Fig. 10 is a perspective view of a cooking appliance to which a decoration panel for a home appliance is applied according to an embodiment.

### DETAILED DESCRIPTION OF THE EMBODIMENTS

Reference will now be made in detail to the embodiments of the present disclosure, examples of which are illustrated in the accompanying drawings. However, the sprit of the present disclosure is not limited to the embodiments, and other embodiments by modifications, additions, and deletions of other element also fall on the sprit of the present disclosure.

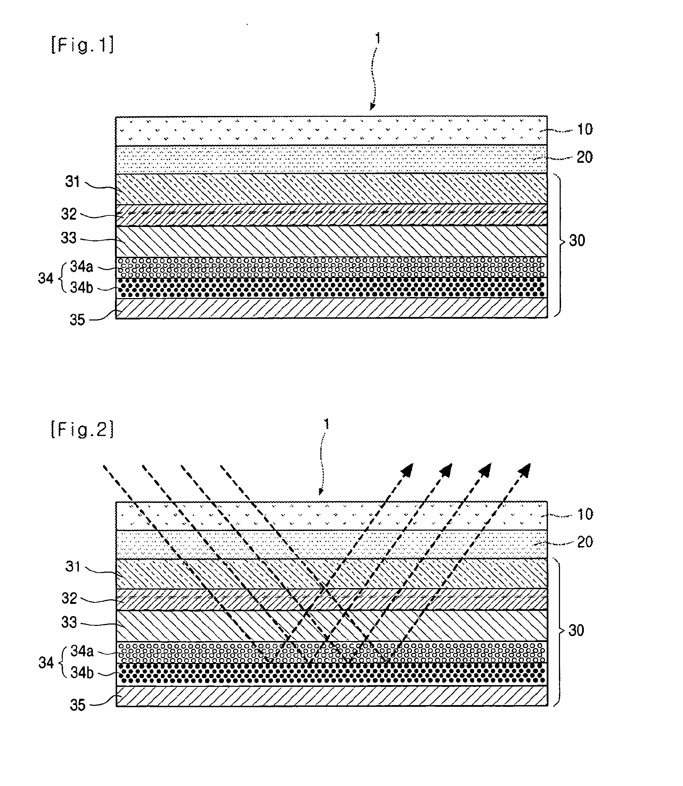

Fig. 1 is a sectional view of a decoration panel for a home appliance according to an embodiment, and Fig. 2 is a schematic sectional view of a state in which light is reflected by a decoration panel for a home appliance according to an embodiment.

Referring to Figs. 1 and 2, a decoration panel 1 includes a green glass 10, a film adhesive layer 20, and a printed film 30.

In detail, the green glass 10 is disposed at the outmost side to define an outer appearance. Also, the blue glass 10 is formed of a transparent material to allow patterns or colors of the printed film 30 disposed on a backside thereof to be seen therethrough from the outside.

The green glass 10 may excellently support and protect the printed film 30. Also, the green glass 10 has a superior gloss and elegant appearance, and in particular, has a high strength and low-cost.

When the green glass 10 is thicker in thickness or a background color having a bright color is shone thereto, the green glass 10 may itself exhibit a light green color by Fe components contained in the green glass 10. Here, the natural green color of the green glass 10 is exhibited to the outside only when a print layer having a bright light is disposed on the backside of the green glass 10. In general, when a print layer having a dark color is disposed on the backside of the green glass 10, the natural green color of the green glass 10 is not shone.

The decoration panel 1 may be formed of a white glass in which iron components are significantly reduced to exhibit a very transparent color in stead of the green glass 10. However, the white glass has a relatively high manufacturing cost when compared to that of the green glass 10.

The film adhesive layer 20 is disposed on the backside of the green glass 10. The film adhesive layer 20 adheres the green glass 10 to the printed film 30 that will be described below. A pressure sensitive adhesive (PSA) may be coated with a thickness of about 10 µm to about 50 µm on the backside of the green glass 10 to form the film adhesive layer 20.

The printed film 30 may be seen through the green glass 10 to exhibit patterns, colors, and texture of the decoration panel 1. The printed film 30 may include a print layer 32 formed using a gravure printing process and a plurality of layers sequentially adhering to the print layer 32.

In detail, the printed film 30 may include a print support layer 31, the print layer 32, a print adhesive layer 33, a reflective layer 34, and a reflective support layer 35 on the whole. The print layer 32 or the plurality of layers including the print layer 32 may be seen through the green glass 10 to exhibit patterns and colors to the outside.

In further detail, the print support layer 31 forms the uppermost surface of the printed film 30. Also, the print support layer 31 supports the print layer 32 (that will be described below) to serve as a base of the print layer 32. The print support layer 31 may be formed of a synthetic resin material such as polyethylene terephthalate (PET) and have a thickness of about 10 µm to about 80 µm. The print support layer 31 may be transparent to exhibit the colors and patterns of the print layer 32 disposed on a bottom surface of the print support layer 31.

The print layer 32 may be configured to exhibit colors and patterns that are realized through the decoration panel 1. The gravure printing process may be performed on the print support layer 31 to form the print layer 32. In case where a plurality of colors is realized, the gravure printing process may be sequentially performed many times according to each color. The print layer 32 may have a thickness of about 2 µm to about 10 µm.

The print adhesive layer 33 adheres the print layer 32 disposed on the print support layer 31 to the reflective layer 34 disposed on the reflective support layer 35 (that will be described below) to form the printed film 30. An adhesive may be coated on the reflective layer 34 (that will be described below) to form the print adhesive layer 33. The print adhesive layer 33 may have a thickness of about 20 µm to about 60 µm.

An additive such as a metal flake formed of aluminum or copper may be further added to the print adhesive layer 33 to give metal texture or glittering impression to a decoration member. Here, the added additive should have a particle size less than a thickness of the print adhesive layer 33. The additive may include various materials such as pearl, mica, and silica except the metal flake.

The additive added for expressing the metal texture or the glittering impression may be used within a permissible range without affecting adhesion of the additive. As necessary, the additive may be included in other layers such as the print layer 32.

The reflective layer 34 may be disposed on a top surface of the reflective support layer 35 that will be described below. The reflective layer may be provided in case where the print layer 32 has a white color (hereinafter, includes bright colors similar to the white color) or bright colors similar to the white color. This is done because the green glass 10 is not exhibited to the outside due to green properties when the decoration panel 1 has a dark color.

That is, when the decoration panel 1 does not have the white color, the print layer 32 may also have a color different from the white color. The print layer 32 may be adhered to a base layer formed of polyvinyl chloride (PVC) by the print adhesive layer to form the printed film 30.

On the other hand, when the decoration panel 1 has the white color, the print layer 32 may also have a white color. The print layer 32 is adhered to the reflective layer 34 by the print adhesive layer 33. The reflective layer 34 may include a white base layer 34a having a white color and a red base layer 34b (here, a green color is complemented by a red color) to conceal the green color of the green glass 10.

In detail, the white base layer 34a improves reflectance of the print layer 32. The white base layer 34a is disposed below the print adhesive layer 33 and formed using the gravure printing process. Thus, an entire surface of the white base layer 34a may have a white color.

In particular, the white base layer 34a is colored by a printing ink having a white color to improve the reflectance of the print layer 32 by color reflection, thereby concealing the green color of the green glass 10. When the gravure printing process is performed, the white printing ink contains a white inorganic pigment of about 5% to about 35%, a resin of about 10% to about 20%, a solvent of about 35% to about 80%, and an additive, for reinforcing an ink function, of about 5% to about 10%.

Among these, the inorganic pigment may use Ag and Zn, titanium oxide (TiO₂), or barium oxide (BaO), which have high reflectances among white pigments. Also, at least two or more inorganic pigments among these pigments may be mixed. Each of the inorganic pigments may have a nanoparticle size to maximize the reflectance.

In particular, when TiO₂ is used as the inorganic pigment material, it may prevent light from passing through the white base layer 34a to maximize the reflectance. As a result, the green color of the green glass 10 may be effectively concealed, as well as, a tinting strength may be very improved.

The whit base layer 34a has a thickness of about 10 µm to about 30 µm and is configured to reflect light. The reflectance may be improved by the white base layer 34a to improve intensity of the reflected light penetrating the print layer 32. Thus, colors of the print layer 32 may be further clear to conceal the green color of the green glass 10.

The red base layer 34b may be disposed below the white base layer 34a. The red base layer 34b may further effectively conceal the green color of the green glass 10. An ink having a red color complemented by the green color is colored with a thickness of about 1 µm to about 5 µm to form the red base layer 34b.

In detail, the red base layer 34b is configured to emit white light by mixing light when a portion of light penetrating the white base layer 34a is reflected to pass through the green glass 10. Thus, the green color of the green glass 10 may be concealed by a complementary effect due to the light reflected by the red base layer 34b. As necessary, the red base layer 34b may be omitted. In this case, the reflective layer 34 may be formed as only the white base layer 34a.

The reflective support layer 35 is disposed on a bottom surface of the reflective layer 34. The reflective layer 34 may be printed on the reflective support layer 35. The reflective support layer 35 may be formed of a synthetic resin such as polyvinyl chloride (PVC) and have a thickness of about 20 µm to about 200 µm. The reflective support layer 35 may support the printed film 30 overall and additionally conceal the green color of the green glass 10 when the reflective support layer 35 has a white color.

The reflective support layer 35 may have a red color complemented by the green color of the green glass 10. In this case, the reflective support layer 35 may serve as the red base layer 34b. That is, when the reflective support layer 35 has the red color, the red base layer 34b may be omitted.

Hereinafter, a method of manufacturing a decoration member including the above-described components according to an embodiment will be described.

A green glass 10 having a thickness of about 3.2 mm is processed corresponding to a size of a decoration panel 1 to form the green glass 10 defining an outer surface of the decoration panel 1.

A printed film 30 is formed to adhere to the green glass 10. A print support layer 31 is formed with a thickness of about 10 µm to about 80 µm using a transparent synthetic resin, e.g., PET to form the printed film 30. Also, the print support layer 31 is formed in a roll type to perform a continuous printing process. A coating process such as an ultraviolet (UV) coating process may be performed on the print support layer 31 to improve hardness and chemical resistance.

The formed print support layer 31 is mounted on a printing machine. A gravure printing process is performed on the print support layer 31 to print patterns and colors to be expressed through a decoration panel 1, thereby forming a print layer 32. Here, according to the gravure printing process, the print layer 32 may be continuously printed and formed on the roll-type print support layer 31. When the print layer 32 has various colors due to different background colors and pattern colors, the print layer 32 may be printed many times.

When the print layer 32 has a white color, a reflective layer 34 is formed to conceal the green color of the green glass 10. For this, a reflective support layer 35 is formed with a thickness of about 50 µm to about 200 µm using a synthetic resin material such as PVC or PET. The reflective support layer 35 may be formed in a roll type to perform a continuous printing process. A coating layer may be further formed on a surface of the reflective support layer 35 to improve hardness and chemical resistance.

The reflective support layer 35 is mounted on the printing machine after the reflective support layer 35 is formed, and then, the reflective layer 34 is printed using the gravure printing process.

Here, when the reflective support layer 35 does not have a red color, but have a white color or other colors, the reflective layer 34 may be formed with two layers of a red base layer 34b and a white base layer 34a. When the reflective support layer 35 has the red color, the reflective layer 34 has the same color as that of the white base layer 34a.

In detail, when the reflective support layer 35 does not have the red color, the gravure printing process is performed on a top surface of the reflective support layer 35 to print the red base layer 34b with a thickness of about 1 µm to about 5 µm. Then, the gravure printing process is performed again on a top surface of the red base layer 34b to print the white base layer 34a with a thickness of about 10 µm to about 30, thereby completing the formation of the reflective layer 34.

Here, a printing ink containing an inorganic pigment having a nanoparticle size may be used as printing inks of the red base layer 34b and the white base layer 34a to improve reflectance. In particular, a white inorganic pigment used for the white base layer 34a contains titanium (Ti) having a nanoparticle size to improve the reflectance of the white base layer 34a. Silver, zinc, and barium may be used as the white inorganic pigment used for the white base layer 34a. Also, silver, zinc, and barium are mixed together in predetermined ratio.

When the reflective support layer 35 has the red color, since the reflective support layer 35 itself has a function that conceals the green color of the green glass 10 by a complementary effect, the reflective layer 34 and the whit base layer 34a may be formed in a single layer.

The gravure printing process is performed on a top surface of the reflective support layer 35 to print the white base layer 34a with a thickness of about 10 µm to about 30 µm, thereby completing the formation of the reflective layer 34.

After the print layer 32 is completely printed on the print support layer 31 and the reflective layer 34 is completely printed on the reflective support layer 34, an adhesive is coated with a thickness of about 20 to about 60 on the reflective layer 34 or the print layer 32 to form a print adhesive layer 33 adhering the reflective layer 34 to the print layer 32.

The print adhesive layer 33 is a layer for laminating the print support layer 31 on which the print layer 32 is printed and the reflective support layer 35 on which the reflective layer 34 is printed. Additives such as a metal flake, pearl, mica, and silica may be further added to the print adhesive layer 33 to give metal texture or glittering impression to the decoration panel 1.

After the print adhesive layer 33 is formed, the print support layer 31 on which the print layer 32 is printed and the reflective support layer 35 on which the reflective layer 34 are adhered to each other to complete the formation of the decoration panel 1 by adhering the green glass 10 to the printed film 30.

The completely formed printed film 30 is adhered to a film adhesive layer 20 that is coated on the green glass 10 or the print support layer 31 of the printed film 30. The green glass 10 and the printed film 30 are adhered to each other to complete the formation of the decoration panel 1.

Hereinafter, an effect of the decoration panel including the above-described components according to an embodiment will be described.

Referring to Fig. 2, light incident from the outside of the decoration panel 1 toward the decoration panel 1 penetrates the print layer 32 to reach the reflective layer 34.

The incident light does not penetrate the reflective layer 34 by the white inorganic pigment contained in the white base layer 34a of the reflective layer 34, but is reflected mostly. That is, the almost light incident into the decoration panel 1 is reflected toward the outside due to the high reflectance by the color reflection of the white base layer 34a and the high reflectance of the white inorganic pigment. Here, the white color of the print layer 32 may become too bright to conceal the green color of the green glass 10.

The red color of the red base layer 34b of the reflective layer 34 reflects again the light penetrating the white base layer 34a. Here, since the red base layer 34b has the red color that is complemented by the green color of the green glass 10, the red base layer 34b may further conceal the green color of the green glass 10 by the complementary effect.

That is, the reflectance of the light incident through the print layer 32 may be improved by the light reflected by the white base layer 34a to shine the white color of the print layer 32. In addition, the green color of the green glass 10 may be completely concealed by the complementary effect softly shining on the red base layer 34b disposed below the white base layer 34a.

Thus, although the print layer 32 constitutes the decoration panel 1 using the white printed film 30 and the green glass 10 to allow the decoration panel 1 to have the white color, since the green color of the green glass 10 is completely concealed by the reflective layer 34, the natural white color of the decoration panel 1 may be expressed in perfection.

The decoration panel according to an embodiment may be applied to various home appliances. Thus, a structure in which the decoration panel is installed at the various home appliances will be described below.

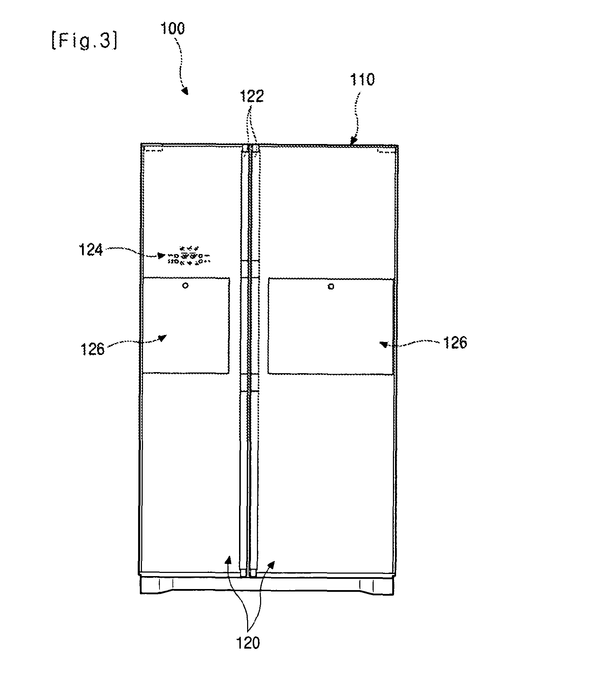

Fig. 3 is a front view of a side-by-side refrigerator to which a decoration panel for a home appliance is applied according to an embodiment.

Referring to Fig. 3, a refrigerator 100 has an approximately rectangular parallelepiped shape on the whole. An outer appearance of the refrigerator 100 is defined by a main body 100 having at least one storage space by partitioning the inside of the refrigerator 100 and a door 120 covering the storage space.

The main body 110 has a rectangular parallelepiped shape with an opened front surface. A storage space for storing foods is defined inside the main body 110. The storage space is partitioned into left and right sides to respectively define a refrigerator compartment and a freezer compartment. The respective storage spaces are selectively covered by the door 120.

The door 120 selectively covers the opened front surface of the refrigerator, i.e., the refrigerator compartment and the freezer compartment. The door 120 has the same configuration as that of the opened front surface of the refrigerator compartment and the freezer compartment. The door 120 is hinge-coupled to the main body 110 to allow it 120 to be rotated in left and right direction. The door 120 locks cool air within the storage space in a state where the door 120 is closed. Also, the door defines a front outer appearance of the refrigerator 100.

A handle 122 grasped by a user to rotate the door 120 is disposed on a front surface of the door 120. The door includes a display assembly 124 for confirming a usage state of the refrigerator 100, a home bar 126 for withdrawing the foods within the storage space, and a dispenser (not shown) for dispensing water or ices.

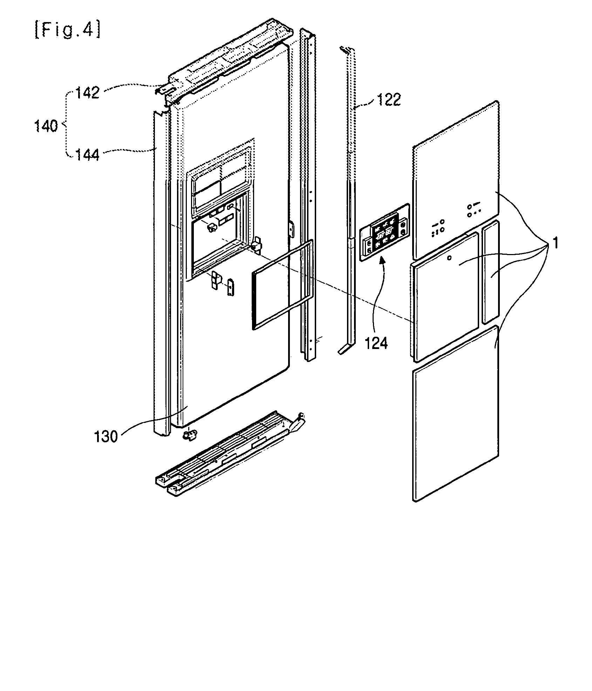

Fig. 4 is an exploded perspective view illustrating a door of Fig. 4.

The door 120 will be described with reference to Fig. 4. The door 120 has a rectangular shape when viewed from a front side and a predetermined thickness. The door 120 include an outdoor case 130, a door liner (not shown), a decoration panel 1, and a deco member 140, which fixes the outdoor case 130, the door liner, and the decoration panel 1. The outdoor case 130, the door liner, the decoration panel 1, and the deco member 140 are coupled to each other to define the whole configuration of the door 120.

The outdoor case 130 defines an overall configuration of the door 120. A circumference of an iron plate having a rectangular shape is bent to form the outer case 130. The operable display assembly 124 for displaying an operation state of the refrigerator is disposed on a front surface of the outer case 130.

The display assembly 124 may be exposed to the outside of the door 120. As necessary, the display assembly 124 may be disposed inside the door 120 to see through the decoration panel 1 from the outside.

The door liner defines a configuration of a back surface of the door 120 and is formed of a plastic resin material. Although not shown in detail, a formation end, such as a basket, for mounting a receiving member in which the foods are received may be disposed, or a separate space may be defined.

The outer case 130 is spaced from the door liner. Thus, when the outer case 130 and the door liner are coupled to each other, a sealed space is defined between the outer casa 130 and the door liner. An insulation material is filled into the space. The insulation material is formed of a foamable material such as expandable poly-styrene (EPS). After a foaming liquid is injected, the foaming liquid is foamed to form the insulation material. The insulation material is equal to those of a general other refrigerators.

The insulation material is filled and foamed to form one assembly including the outer case 130 and the door liner. In this state, the deco member 140 and the decoration panel 1 are coupled to form the door 120.

The deco member 140 is disposed on a circumference of the door 120. The deco member 140 fixes the assembly of the outer case 130 and the door liner and the decoration panel 1 to define left and right surfaces and top and bottom surfaces of the door 120.

In detail, the deco member 140 includes cap decos 142 disposed on upper and lower ends of the door 12 and side decos 144 disposed on left and right ends of the door 120. The cap decos 142 are coupled to upper and lower ends of the assembly of the outer case 130 and the door liner to fix upper and lower ends of the decoration panel 1, respectively. The side decos 144 are coupled to left and right ends of the assembly of the outer case 130 and the door liner to fix left and right ends of the decoration panel 1, respectively.

The decoration panel 1 defines a front surface of the door 120. Thus, the decoration panel 1 has a rectangular plate shape (when viewed from a front side) corresponding to a front configuration of the door 120. The decoration panel 1 may be formed as one plate on an entire surface of the door 120. As shown in Fig. 4, when the door 120 includes the home bar 126, the decoration panel 1 may be disposed on sides of top and bottom sides and left and right sides with the home bar 126 formed of a plurality of sheets therebetween.

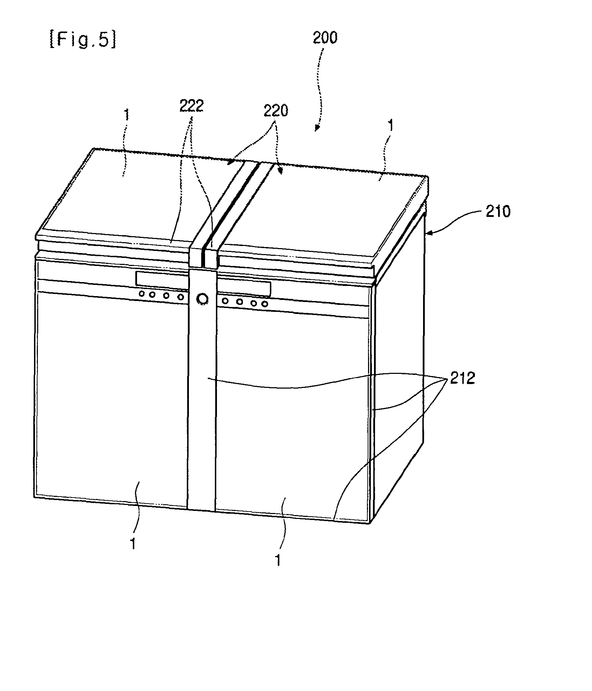

Fig. 5 is a perspective view of a chest refrigerator to which a decoration panel for a home appliance is applied according to an embodiment.

Referring to Fig. 5, as described above, the decoration panel according to an embodiment may be mounted on the door and the main body of the refrigerator.

In detail, a refrigerator 200 according to this embodiment includes a main body 210 having an upwardly opened storage space and a door 200 disposed on a top surface of the main body 210 to selectively open and close the storage space.

One or more doors 220 may be provided according to a configuration of the storage space. The door 220 is opened and closed by rotation thereof. A top surface of the door 220 may be exposed to the outside, and a decoration panel 1 having the same components as those of the previously described embodiment may be disposed on the top surface of the door 220 to provide an elegant outer appearance.

Since the decoration panel 1 has the same components as those of the previously described embodiment, their detailed description will be omitted.

A door deco 222 may be disposed on a circumference of the door 220 to fixedly mount the decoration panel 1.

When the refrigerator 200 is installed, the top surface of the door and a front surface of the main body. Thus, a decoration panel 1 equal to that of the door 220 is provided at least front surface of the main body 210 to improve the outer appearance of the refrigerator 200. The decoration panel 1 defines the front surface of the main body 210. As necessary, the decoration panel 1 may define lateral surfaces and other surfaces of the main body 210 as well as the front surface of the main body 210.

Also, the decoration panel 1 is fixedly mounted on a main body deco 212 defining a circumference of the main body 210. As necessary, the decoration panel may be fixedly mounted by other fixing members disposed on the main body 210.

The decoration panel 1 may be mounted on all of the door 220 and the main body 210. As necessary, the decoration panel 1 may be mounted on only any one of the door 220 and the main body 210.

Thus, the outer appearance of the refrigerator 200 may be expressed by the decoration panel 1. When the decoration panel 1 is formed using a printed film 30 having a white color, a green color of a green glass may be concealed to express the white color in perfection.

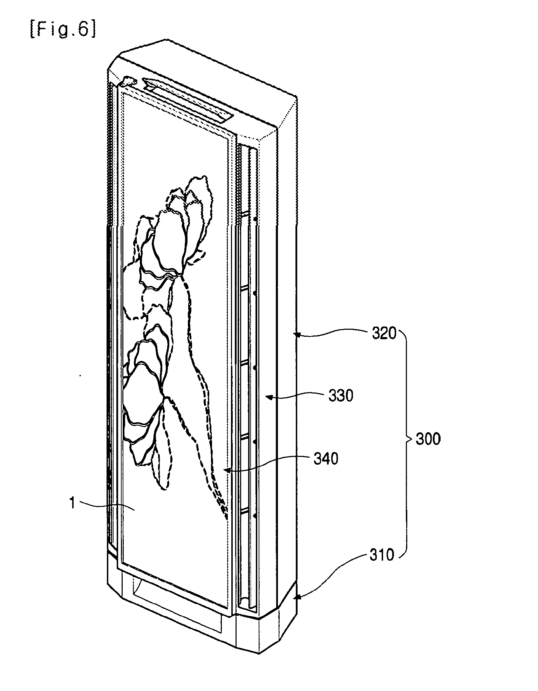

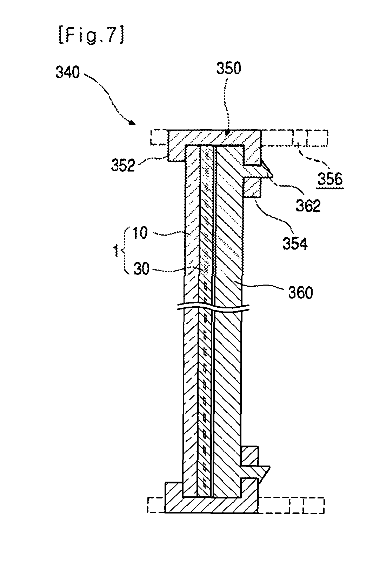

Fig. 6 is a perspective view of an air-conditioner to which a decoration panel for a home appliance is applied according to an embodiment, and Fig. 7 is a sectional view taken along line A-A' of Fig. 6.

Referring to Figs. 6 and 7, a main body 300 of an indoor unit (hereinafter, referred to as an air-conditioner) of an air-conditioner to which a decoration panel for a home appliance according to this embodiment is applied includes a base 310, a rear cabinet 320 disposed on a rear upper side of the base 310, a front cabinet 330 disposed on a front upper side of the base 310, and a front panel 340 disposed on a front surface of the front cabinet 330. An outer appearance of the main body 300 is defined by the above-described components.

The base 310, the rear cabinet 320, and the front cabinet 330 are coupled to define a predetermined space therein. A blow fan for sucking and exhausting air is disposed inside the space. Also, a filter assembly for filtering the sucked air, a heat exchanger for heat-exchange of the sucked air, and a component for performing a cooling cycle are received into the space.

A plurality of suction holes through which external air is sucked and a plurality of exhausting holes through which the heat-exchanged air is exhausted are defined in the base 310, the rear cabinet 320, and the front cabinet 330.

The front panel 340 is rotatably and detachably disposed on the front cabinet 330. Thus, the front panel 340 is rotated or detached to open the front surface of the front cabinet 330. As a result, the components disposed inside the front cabinet 330 may be easily maintained and repaired.

The front panel 340 defines an outer appearance of a front surface of the air-conditioner. The front panel 340 may have a structure in which a color or design thereof is easily modified.

In detail, the front panel 340 includes a circumference cover 350 defining a circumference of the front panel 340, a rear panel 360 fixed by the circumference cover 350, and a decoration panel 1 fixed to the circumference cover 350 together with the rear panel 360.

In further detail, like the previously described embodiment, a green glass 10 and a printed film 30 are adhered to each other by a film adhesive layer 20 to form the decoration panel 1. The decoration panel 1 contacts the front surface of the rear panel 360 to allow the rear panel 360 to support the decoration panel 1 from a rear side.

The decoration panel 1 and the rear panel 360 are fixed to the circumference cover 350 in a state where the decoration panel 1 overlaps the rear panel 360. The circumference cover 350 may be bent in an approximately ⊏-shape. A front surface 352 of the circumference 350 restrains a front surface of the decoration panel 1, and a rear surface 354 of the circumference 350 restrains a back surface of the rear panel 360. Here, a hook hole 356 for inserting a hook 362 disposed on the rear panel 360 may be further defined in the rear surface 354.

Thus, the decoration panel 1 may be separated from the circumference cover 350 to replace the decoration panel 1 with the other decoration panel having various colors and patterns. As previously described embodiment, when a printed film 30 having a white color is attached to the decoration panel 1, a green color is not expressed, but the white color is expressed in perfection.

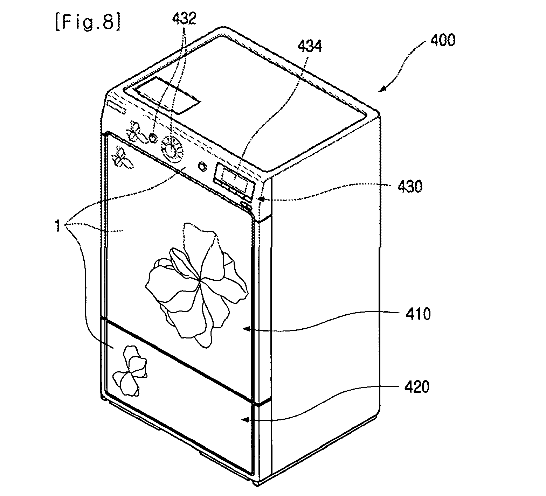

Fig. 8 is a perspective view of a washing machine to which a decoration panel for a home appliance is applied according to an embodiment.

Referring to Fig. 8, a main body 400 of a washing machine to which a decoration panel for a home appliance is applied according to this embodiment has an approximately hexahedral shape.

Although not shown in detail, the main body 400 includes a tub in which washing water is stored, a drum rotatably disposed inside the tub to receive laundry, a driving unit transmitting a rotation force for rotating the drum, a washing water supply unit for supplying the washing water to the tub, and a discharge unit for discharging the washing water.

A portion of a front surface of the main body 400 is opened to put the laundry into the drum. The opened front surface of the main body 400 is opened and closed by a cover 410. For this, the cover 410 is rotatably disposed on the main body 400 and defines an outer appearance of the front surface of the main body 400 in a state where the cover 410 is closed. A lower drawer 420 withdrawable in a drawer-type may be provided at a lower portion of the main body 400.

A front surface of the cover 410 and a front surface of the lower drawer 420 define an outer appearance of a front surface of the main body 400 of the washing machine. A decoration panel 1 may be attached to the cover 410 and the lower drawer 420. The decoration panel 1 is attached to the cover 410 and the lower drawer 420 using an adhesive. Alternatively, the decoration panel 1 may be mounted on the cover 410 and the lower drawer 420 by a separate adhesion unit, a separate coupling unit, or a separate coupling structure.

A window for confirming an inner state of the drum may be defined in the cover 410. The window may be defined in the operable door. When the window or the door is provided, the decoration panel 1 may be disposed on a remaining portion of the cover 410 except the window or the door.

The decoration panel 1 defines an almost front surface of the cover 410 and the lower drawer 420 to define an almost outer appearance of the main body 400 of the washing machine. The decoration panel 1 may be disposed on a control panel 430 disposed on a front upper portion of the main body 400. Here, the decoration panel 1 may define an entire surface except an operation switch 432 and a display 434 that are disposed on the control panel 430.

As necessary, the decoration panel 1 may be disposed on left and right surfaces and a rear surface or top surface of the main body 400.

Thus, the outer appearance of the main body 400 of the washing machine may be expressed by the decoration panel 1. Like the previously described embodiment, when a printed film having a white color is attached to the decoration panel 1, reflectance may be improved by color reflection of a reflective layer to conceal a green color of a green glass, thereby expressing the white color in perfection.

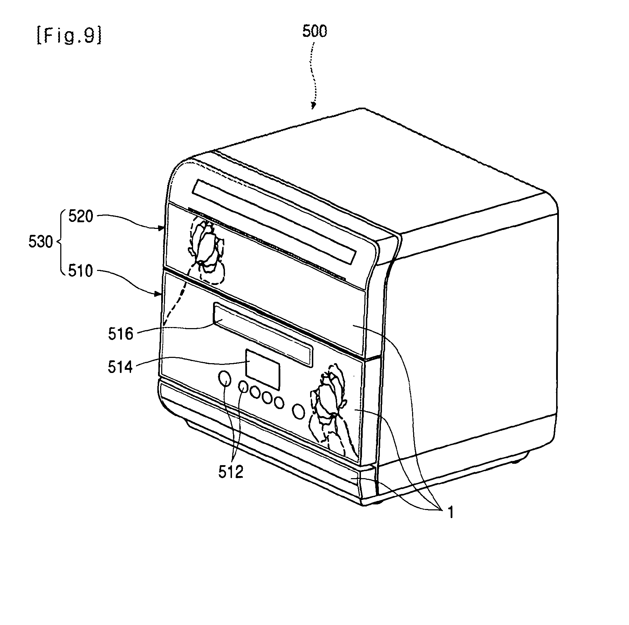

Fig. 9 is a perspective view of a dishwasher to which a decoration panel for a home appliance is applied according to an embodiment.

Referring to Fig. 9, an outer appearance of a dishwasher to which a decoration panel for a home appliance is applied according to an embodiment is defined by a main body 500 having an approximately rectangular parallelepiped shape.

Although not shown in detail, the main body 500 includes a cavity for receiving dishes to be washed, a rack member on which the dishes are mounted and withdrawable from/into the cavity, a water supply unit for supplying washing water into the cavity, and a discharge unit for discharging the washed water.

A door 510 is disposed on the main body 500 of the dishwasher. The door 510 may selectively cover an opened front surface of the main body 500. The door 500 defines an outer appearance of a front surfaced of the dishwasher in a state where the door 510 is closed.

The door includes an upper door 520 and a lower door 530. When the lower door 530 is operated, the upper door 520 may be opened and closed in cooperation with the lower door 530. An operation part 512 for confirming an operation state of the dishwasher, a display 514, and a handle 516 may be disposed on the door 510.

A decoration panel 1 is attached to a front surface of the door 510, i.e., front surfaces of the upper door 520 and the lower door 530. Like the previously described embodiment, the decoration panel 1 defines an outer appearance of a front surface of the door 510.

The decoration panel 1 may be adhered to the front surface of the door 510 using an adhesive. As necessary, the decoration panel 1 may be fixedly mounted on the door 510 by a separate fixing unit or a separate fixing structure.

The decoration panel 1 may be attached on a remaining front surface of the main body 500 except the door 510. That is, the decoration panel 1 may be attached to sides of the front surface of the main body 500 corresponding to an upper side of the upper door 520 and a lower side of the lower door 530. When the door 510 is closed, the front surface of the main body 500 may be defined by the decoration panel 1.

Also, as necessary, the decoration panel 1 may be disposed on left and right surfaces and rear and top surfaces of the main body 500.

Thus, the outer appearance of the main body 500 of the dishwasher may be expressed by the decoration panel 1. Like the previously described embodiment, when a printed film having a white color is attached to the decoration panel 1, reflectance may be improved by color reflection of a reflective layer to conceal a green color of a green glass, thereby expressing the desired white color of the decoration panel 1 in perfection.

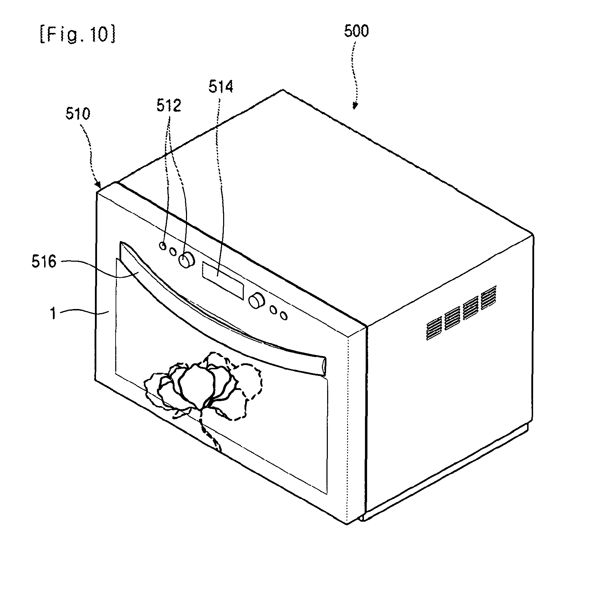

Fig. 10 is a perspective view of a cooking appliance to which a decoration panel for a home appliance is applied according to an embodiment.

Referring to Fig. 10, an outer appearance of a cooking appliance to which a decoration panel for a home appliance is applied according to an embodiment is defined by a main body 500 having an approximately rectangular parallelepiped shape.

Although not shown in detail, the main body 500 of the cooking appliance may include a cavity for receiving foods to be cooked, a heating unit or a magnetron for cooking the foods within the cavity, and a fan assembly for convection within the cavity.

A door 510 is disposed on the main body 500 of the cooking appliance. The door 510 may selectively cover an opened front surface of the main body 500. The door 500 defines an outer appearance of a front surfaced of the cooking appliance in a state where the door 510 is closed.

The door 510 is hinge-coupled to the main body 500 of the cooking appliance and rotatably coupled to the main body 500. The door 510 may be horizontally or vertically rotated to selectively open and close an opened front surface of the cooking appliance.

An operation part 512 for manipulating an operation of the cooking appliance and confirming an operation state of the cooking appliance, a display 514, and a handle 516 may be disposed on the door 510. A portion of the door 510 may be transparent. In this case, a cooking process of foods received into the main body 500 may be confirmed by a user.

A decoration panel 1 is attached to a front surface of the door 510. Like the previously described embodiment, the decoration panel 1 defines an outer appearance of a front surface of the door 510.

The decoration panel 1 may be adhered to the front surface of the door 510 using an adhesive. As necessary, the decoration panel 1 may be fixedly mounted on the door 510 by a separate fixing unit or a separate fixing structure. Also, the decoration panel 1 may be attached to a top surface or left and right surfaces of the main body 500 of the cooking appliance expect the door 510.

The outer appearances of the main body 500 or door 510 may be expressed by the decoration panel 1. Like the previously described embodiment, when a printed film having a white color is attached to the decoration panel 1, reflectance may be improved by color reflection of a reflective layer to conceal a green color of a green glass, thereby expressing the desired white color of the decoration panel 1 in perfection.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A decoration panel for home appliance comprising:
a transparent green glass (10) defining an outer appearance; and
a decoration film (30) adhered to the green glass to realize a color and pattern seen through the green glass to the outside,
wherein the decoration film comprises:
a print layer (32) on which the color and pattern expressed to the outside are printed using a gravure printing process; and
a reflective layer (34) disposed on a back surface of the print layer to conceal a green color of the green glass,
**characterized in that** the reflective layer comprises:
a white base layer (34a) printed by a printing ink containing a white inorganic pigment to improve a color reflectance;
a red base layer (34b) printed with a red color on the white base layer to improve concealability of the green color of the green glass.

2. The decoration panel for the home appliance according to claim 1, further comprising :
a print adhesive layer (33) between the print layer and the reflective layer,
wherein the print adhesive layer adheres the print layer to the reflective layer.

3. The decoration panel for the home appliance according to claim 2, wherein, after the print layer and the reflective layer are adhered to each other, the print layer is adhered to the back surface of the green glass.

4. The decoration panel for the home appliance according to claim 2, wherein any one of a metal flake, pearl, mica, and silica is added to the print layer or the print adhesive layer to express a glittering impression.

5. The decoration panel for the home appliance according to claim 1, wherein the white inorganic pigment uses any one of Ag, Zn, titanium oxide (TiO2), and barium oxide (BaO).

6. The decoration panel for the home appliance according to claim 1, further comprising a film adhesive layer (20) between the decoration film and the green glass to adhere the decoration film to the green glass.

7. The decoration panel for the home appliance according to claim 1, further comprising:
a print support layer (31) on which the print layer is printed using the gravure printing process on a top surface of the print layer; and
a reflective support layer (35) on which the reflective layer is printed using the gravure printing process on a bottom surface of the reflective layer.

8. The decoration panel for the home appliance according to claim 7, wherein the print support layer and the reflective support layer are formed of polyethylene terephthalate (PET) or polyvinyl chloride (PVC).

## Patentansprüche

1. Dekorplatte für ein Haushaltsgerät, die aufweist:
ein transparentes grünes Glas (10), das ein äußeres Erscheinungsbild definiert; und
eine Dekorfolie (30), die an dem grünen Glas klebt, um eine Farbe und ein Muster zu realisieren, die durch das grüne Glas nach außen zu sehen sind,
wobei die Dekorfolie aufweist:
eine Druckschicht (32), auf welche die Farbe und das Muster, die nach außen wiedergegeben werden, unter Verwendung eines Tiefdruckverfahrens gedruckt sind; und
eine reflektierende Schicht (34), die auf einer hinteren Oberfläche der Druckschicht angeordnet ist, um eine grüne Farbe des grünen Glases zu verbergen,
**dadurch gekennzeichnet, dass** die reflektierende Schicht aufweist:
eine weiße Grundschicht (34a), die durch eine Drucktinte gedruckt ist, welche ein weißes anorganisches Pigment enthält, um eine Farbreflexion zu verbessern;
eine rote Grundschicht (34b), die mit einer roten Farbe auf die weiße Grundschicht gedruckt ist, um die Verbergung der grünen Farbe des grünen Glass zu verbessern.

2. Dekorplatte für das Haushaltsgerät nach Anspruch 1, die ferner aufweist:
eine Druckklebeschicht (33) zwischen der Druckschicht und der reflektierenden Schicht,
wobei die Druckklebeschicht die Druckschicht an die reflektierende Schicht klebt.

3. Dekorplatte für das Haushaltsgerät nach Anspruch 2, wobei, nachdem die Druckschicht und die reflektierende Schicht aneinander geklebt sind, die Druckschicht an die hintere Oberfläche des grünen Glases geklebt ist.

4. Dekorplatte für das Haushaltsgerät nach Anspruch 2, wobei zu der Druckschicht oder der Druckklebeschicht ein beliebiges der folgenden hinzugefügt wird, um einen glitzernden Eindruck wiederzugeben: Metallplättchen, Perle, Glimmer, Quarz.

5. Dekorplatte für das Haushaltsgerät nach Anspruch 1, wobei das weiße anorganische Pigment ein beliebiges der folgenden verwendet: Ag, Zn, Titanoxid (Ti02) und Bariumoxid (BaO).

6. Dekorplatte für das Haushaltsgerät nach Anspruch 1, die ferner eine Folienklebeschicht (2) zwischen der Dekorfolie und dem grünen Glas aufweist, um die Dekorfolie an das grüne Glas zu kleben.

7. Dekorplatte für das Haushaltsgerät nach Anspruch 1, die ferner aufweist:
eine Druckträgerschicht (31), auf welche die Druckschicht unter Verwendung des Tiefdruckverfahrens auf eine obere Oberfläche der Druckschicht gedruckt ist; und
eine reflektierende Trägerschicht (35), auf welche die reflektierende Schicht unter Verwendung des Tiefdruckverfahrens auf eine untere Oberfläche der reflektierenden Schicht gedruckt ist.

8. Dekorplatte für das Haushaltsgerät nach Anspruch 7, wobei die Druckträgerschicht und die reflektierende Trägerschicht aus Polyethylenterephthalat (PET) oder Polyvinylchlorid (PVC) ausgebildet sind.

## Revendications

1. Panneau de décoration pour appareil domestique comprenant :
un verre vert transparent (10) définissant une apparence extérieure ; et
un film de décoration (30) collé sur le verre vert pour réaliser une couleur et un motif en vue à travers le verre vert à l'extérieur,
dans lequel le film de décoration comprend :
une couche d'impression (32) sur laquelle la couleur et le motif exprimés à l'extérieur sont imprimés en utilisant un procédé d'impression par gravure ; et
une couche réfléchissante (34) disposée sur une surface arrière de la couche d'impression pour dissimuler une couleur verte du verre vert,
**caractérisé en ce que** la couche réfléchissante comprend :
une couche de base blanche (34a) imprimée avec une encre d'impression contenant un pigment inorganique blanc pour améliorer une réflectance de couleur,
une couche de base rouge (34b) imprimée avec une couleur rouge sur la couche de base blanche pour améliorer la dissimulation de la couleur verte du verre vert.

2. Panneau de décoration pour appareil domestique selon la revendication 1, comprenant en outre :
une couche adhésive d'impression (33) entre la couche d'impression et la couche réfléchissante,
dans lequel la couche adhésive d'impression colle la couche d'impression sur la couche réfléchissante.

3. Panneau de décoration pour appareil domestique selon la revendication 2, dans lequel, après avoir collé la couche d'impression et la couche réfléchissante l'une sur l'autre, la couche d'impression est collée sur la surface arrière du verre vert.

4. Panneau de décoration pour appareil domestique selon la revendication 2, dans lequel un élément quelconque parmi un copeau de métal, perle, mica et silice est ajouté à la couche d'impression ou à la couche adhésive d'impression pour donner une impression de scintillement.

5. Panneau de décoration pour appareil domestique selon la revendication 1, dans lequel le pigment inorganique blanc utilise un élément quelconque parmi Ag, Zn, oxyde de titane (TiO2) et oxyde de baryum (BaO).

6. Panneau de décoration pour appareil domestique selon la revendication 1, comprenant en outre une couche adhésive de film (20) entre le film de décoration et le verre vert pour coller le film de décoration sur le verre vert.

7. Panneau de décoration pour appareil domestique selon la revendication 1, comprenant en outre :
une couche de support d'impression (31) sur laquelle la couche d'impression est imprimée en utilisant le procédé d'impression par gravure sur une surface supérieure de la couche d'impression ; et
une couche de support réfléchissante (35) sur laquelle la couche réfléchissante est imprimée en utilisant le procédé d'impression par gravure sur une surface inférieure de la couche réfléchissante.

8. Panneau de décoration pour appareil domestique selon la revendication 7, dans lequel la couche de support d'impression et la couche de support réfléchissante sont constituées de téréphtalate de polyéthylène (PET) ou de polychlorure de vinyle (PVC).
